(19) Europäisches Patentamt
European Patent Office
Office européen des brevets

(11) **EP 4 557 019 A1**

(12) **EUROPEAN PATENT APPLICATION**

(43) Date of publication:
**21.05.2025  Bulletin 2025/21**

(21) Application number: **24214130.7**

(22) Date of filing: **20.11.2024**

(51) International Patent Classification (IPC):
**G04C 10/00** (2006.01)

(52) Cooperative Patent Classification (CPC):
**G04C 10/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.11.2023  JP 2023196472**

(71) Applicant: **Seiko Epson Corporation**
**Tokyo 160-8801 (JP)**

(72) Inventor: **FUJISAWA, Teruhiko**
**Suwa-shi, 392-8502 (JP)**

(74) Representative: **Lewis Silkin LLP**
**Arbor**
**255 Blackfriars Road**
**London SE1 9AX (GB)**

(54) **ELECTRONICALLY CONTROLLED MECHANICAL TIMEPIECE**

(57)    An electronically controlled mechanical timepiece includes: a mainspring wound by a winding mechanism; a first train wheel; a hand; a speed adjustment device that controls a rotation speed of the first train wheel; a control device that outputs a control signal to the speed adjustment device; a power generation mechanism that generates electric energy in conjunction with the winding mechanism; and a power storage device. The control device and the speed adjustment device operate with the electric energy stored in the power storage device, and the speed adjustment device includes a first rotor that rotates in conjunction with the first train wheel, and a first coil that generates an electromagnetic force to be applied to the first rotor to control the rotation speed of the first train wheel in accordance with the control signal. The power generation mechanism includes a second train wheel that accelerates motion of the winding mechanism in conjunction with the winding mechanism, a second rotor that rotates in conjunction with the second train wheel, and a second coil that generates the electric energy with rotation of the second rotor.

FIG. 1

EP 4 557 019 A1

## Description

The present application is based on, and claims priority from JP Application Serial Number 2023-196472, filed November 20, 2023, the disclosure of which is hereby incorporated by reference herein in its entirety.

BACKGROUND

1. Technical Field

The present disclosure relates to an electronically controlled mechanical timepiece.

2. Related Art

A power generator that is driven through a train wheel by a mainspring to generate an induced voltage, a hand coupled to the train wheel, and an electronically controlled mechanical timepiece that controls a rotation cycle of the power generator to adjust a hand movement speed of the hand coupled to the train wheel are known (for example, refer to JP-A-2000-201483).

In this electronically controlled mechanical timepiece, a switch that short-circuits both ends of a coil of the power generator is provided, and chopping control of turning on and off the switch is performed. As a result, when the switch is turned on, it is possible to store energy in the coil of the power generator in addition to speed adjustment control through a short brake, and when the switch is turned off, it is possible to increase an electromotive voltage since the energy stored in the coil is included.

It is conceivable to rotate a rotor included in the power generator at a high speed in order to improve a power generation capability. However, in the electronically controlled mechanical timepiece according to the related art, the speed adjustment control through the chopping control and processing of increasing the electromotive voltage are performed at the same time, and thus the rotor cannot be rotated at a high speed. In addition, the power generation capability can be improved by increasing an inductance value of the coil. But there is a problem that it is necessary to increase the number of turns of the coil in order to increase the inductance value of the coil, a size of the power generator is increased as a size of the coil is increased, and a degree of freedom in a layout of the power generator or other components is reduced when the power generator is disposed in a movement.

SUMMARY

According to an aspect of the present disclosure, an electronically controlled mechanical timepiece includes: a mainspring; a winding mechanism that winds the mainspring; a first train wheel that transmits mechanical energy of the mainspring; a hand that is driven by the first train wheel to display a time; a speed adjustment device that controls a rotation speed of the first train wheel; a control device that outputs a control signal for controlling the rotation speed to the speed adjustment device; a power generation mechanism that generates electric energy in conjunction with the winding mechanism; and a power storage device that stores the electric energy generated by the power generation mechanism, in which the control device and the speed adjustment device operate with the electric energy stored in the power storage device, the speed adjustment device includes a first rotor that rotates in conjunction with the first train wheel, and a first coil that generates an electromagnetic force to be applied to the first rotor to control the rotation speed of the first train wheel in accordance with the control signal, and the power generation mechanism includes a second train wheel that accelerates motion of the winding mechanism in conjunction with the winding mechanism, a second rotor that rotates in conjunction with the second train wheel, and a second coil that generates the electric energy with rotation of the second rotor.

BRIEF DESCRIPTION OF THE DRAWINGS

FIG. 1 is a front view showing an electronically controlled mechanical timepiece according to a first embodiment.
FIG. 2 is a block diagram showing a configuration of the electronically controlled mechanical timepiece according to the first embodiment.
FIG. 3 is an exploded perspective view showing a main portion of a movement of the electronically controlled mechanical timepiece according to the first embodiment.
FIG. 4 is a diagram showing a circuit configuration of the movement according to the first embodiment.
FIG. 5 is a circuit diagram showing a speed adjustment section according to the first embodiment.
FIG. 6 is a waveform diagram showing a control signal according to the first embodiment.
FIG. 7 is a flowchart showing a speed adjustment control method according to the first embodiment.
FIG. 8 is a waveform diagram showing a relationship between a coil voltage, a rotation detection signal, a reference signal, a power generation detection signal, and the control signal according to the first embodiment.
FIG. 9 is a block diagram showing a configuration of an electronically controlled mechanical timepiece according to a second embodiment.
FIG. 10 is a flowchart showing a speed adjustment control method according to the second embodiment.
FIG. 11 is a block diagram showing a configuration of an electronically controlled mechanical timepiece according to a third embodiment.

FIG. 12 is a circuit diagram showing a rectification/-speed adjustment section of the third embodiment.

FIG. 13 is a block diagram showing a configuration of an electronically controlled mechanical timepiece according to a fourth embodiment.

FIG. 14 is a schematic plan view showing a main portion of a movement of the electronically controlled mechanical timepiece according to the fourth embodiment.

## DESCRIPTION OF EMBODIMENTS

### First Embodiment

Hereinafter, an electronically controlled mechanical timepiece 1 of a first embodiment will be described based on the drawings.

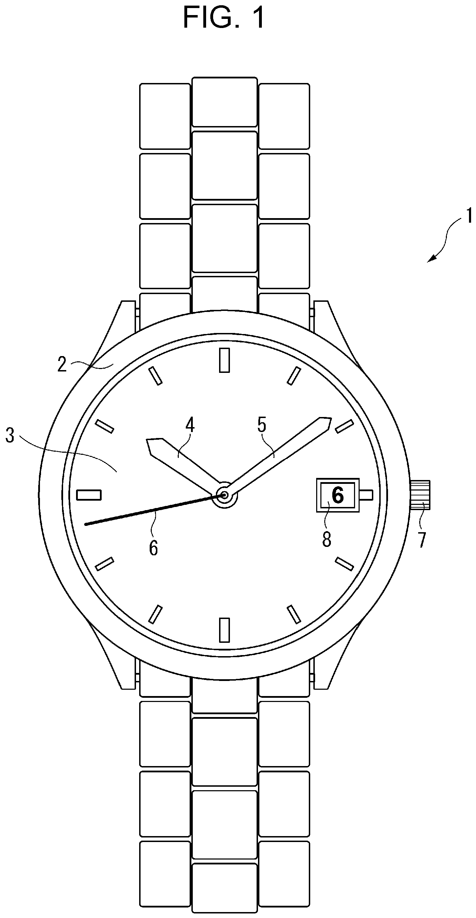

As shown in FIG. 1, the electronically controlled mechanical timepiece 1 includes a case 2, a dial 3, an hour hand 4, a minute hand 5, a seconds hand 6, which are hands, a crown 7, and a date indicator 8.

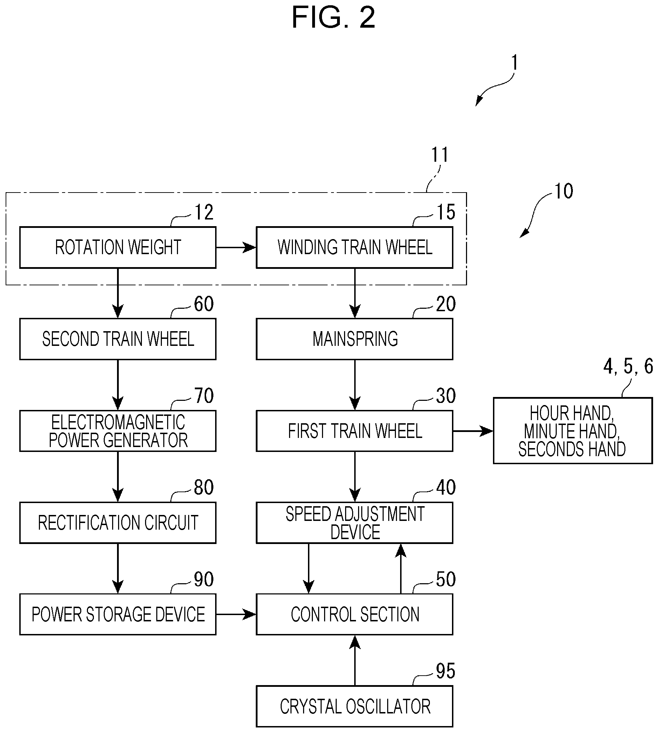

As shown in FIG. 2, the electronically controlled mechanical timepiece 1 includes a movement 10. The movement 10 includes an automatic winding mechanism 11, a mainspring 20, a first train wheel 30, a speed adjustment device 40, a control section 50, a second train wheel 60, an electromagnetic power generator 70, a rectification circuit 80, a power storage device 90, and a crystal oscillator 95.

### Winding Mechanism

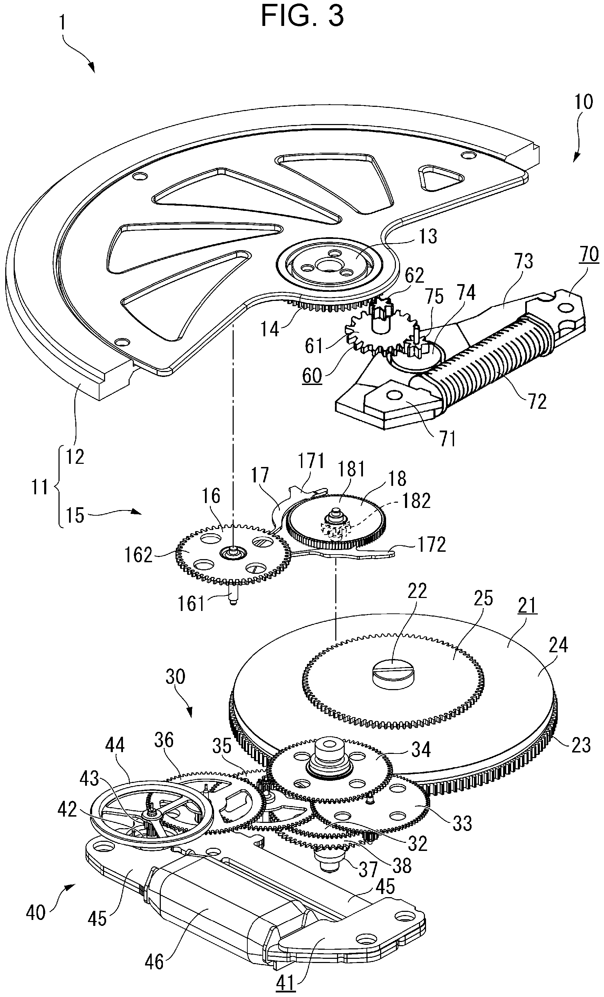

As shown in FIG. 3, the automatic winding mechanism 11 includes a rotation weight 12 and a winding train wheel 15.

The rotation weight 12 is rotatably provided in the movement 10 by a rotation shaft 13 configured with a bearing. A rotation weight pinion 14 is integrally provided on the rotation weight 12.

The winding train wheel 15 includes an eccentric wheel 16, a pawl lever 17, and a transmission wheel 18.

The eccentric wheel 16 includes an eccentric shaft member 161 and an eccentric gear 162 attached to the eccentric shaft member 161. The eccentric shaft member 161 has an eccentric portion eccentric to a rotation axis of the eccentric gear 162, and the pawl lever 17 is rotatably attached to the eccentric portion.

The eccentric gear 162 meshes with the rotation weight pinion 14 and rotates in conjunction with the rotation weight 12. As a result, the eccentric portion of the eccentric shaft member 161 rotates around the rotation axis of the eccentric gear 162, and the pawl lever 17 attached to the eccentric portion performs advancing and retreating motion in a direction of approaching the transmission wheel 18 and a direction of moving away from the transmission wheel 18.

The pawl lever 17 includes a pulling pawl lever portion 171 and a pushing pawl lever portion 172 that interpose a transmission gear 181 of the transmission wheel 18 therebetween in a plan view.

The transmission wheel 18 includes the transmission gear 181 and a transmission pinion 182. In the transmission gear 181, a pulling pawl of the pulling pawl lever portion 171 and a pushing pawl of the pushing pawl lever portion 172 are engaged with each other, and the transmission wheel 18 rotates in one direction in conjunction with the advancing and retreating motion of the pawl lever 17. The rotation of the transmission wheel 18 is transmitted to a ratchet wheel 25 described later, and the mainspring 20 is wound with the rotation of the ratchet wheel 25.

### Mainspring

The mainspring 20 is stored in a barrel complete 21 shown in FIG. 3. The barrel complete 21 includes a barrel stem 22, a barrel gear 23, and a barrel lid 24. An outer end of the mainspring 20 is fixed to the barrel gear 23, and an inner end is fixed to the barrel stem 22. The barrel stem 22 integrally rotates with the ratchet wheel 25. The ratchet wheel 25 meshes with the transmission pinion 182 and rotates by the rotation of the rotation weight 12 being transmitted by the rotation weight pinion 14, the eccentric wheel 16, the pawl lever 17, and the transmission wheel 18. The barrel stem 22 rotates as the ratchet wheel 25 rotates, so that the mainspring 20 is wound. Therefore, the mainspring 20 is wound by the automatic winding mechanism 11 including the rotation weight 12 and the winding train wheel 15. With the automatic winding mechanism 11, for example, a user can automatically wind the mainspring 20 by swinging an arm in a state in which the user equips the electronically controlled mechanical timepiece 1 on the arm and rotates the rotation weight 12.

### First Train Wheel

As shown in FIG. 3, the first train wheel 30 is an acceleration train wheel configured with a center wheel and pinion 32, a third wheel and pinion 33, a fourth wheel and pinion 34, a fifth wheel and pinion 35, and a sixth wheel and pinion 36. A pinion of the center wheel and pinion 32 meshes with the barrel gear 23, and a pinion of the third wheel and pinion 33 meshes with the center wheel and pinion 32. A pinion of the fourth wheel and pinion 34 coaxially disposed with the center wheel and pinion 32 meshes with the third wheel and pinion 33, and a pinion of the fifth wheel and pinion 35 meshes with the fourth wheel and pinion 34. A pinion of the sixth wheel and pinion 36 meshes with the fifth wheel and pinion 35, and a rotor pinion 43 provided in a speed adjustment rotor 42 of the speed adjustment device 40 meshes with the sixth wheel and pinion 36. Therefore, rotation of the barrel gear 23 that is driven to rotate by unwinding of the mainspring 20 is accelerated by the first train wheel 30 and is transmitted to the speed adjustment rotor 42.

The seconds hand 6 is attached to a shaft of the fourth wheel and pinion 34. The minute hand 5 is attached to a tubular pinion 37 that integrally rotates with the center wheel and pinion 32. The hour hand 4 is attached to an hour wheel 38 that rotates in the tubular pinion 37 via a minute wheel (not shown).

Speed Adjustment Device

The speed adjustment device 40 includes a speed adjuster 41 shown in FIG. 3. The speed adjuster 41 includes a speed adjustment rotor 42 which is a first rotor, a rotor pinion 43, a rotor inertia plate 44, a stator 45, and a speed adjustment coil 46 which is a first coil. The speed adjustment rotor 42 is magnetized to two poles, and rotates together with the rotor pinion 43 by the rotor pinion 43 meshing with the sixth wheel and pinion 36. The rotor inertia plate 44 stabilizes the rotation of the speed adjustment rotor 42.

In the present embodiment, two stators 45 are provided, and an opening in which the speed adjustment rotor 42 is disposed is formed at one end side of each stator 45. Further, the speed adjustment coil 46 is wound around one of the two stators 45. The speed adjuster 41 may be one in which the speed adjustment coil 46 is wound around the two stators 45. Further, similarly to the electromagnetic power generator 70 described later, one stator having an opening in which a rotor is disposed and a magnetic core around which a speed adjustment coil is wound may be coupled to configure a speed adjuster.

Second Train Wheel and Electromagnetic Power Generator

As shown in FIG. 3, the electromagnetic power generator 70 includes a magnetic core 71, a power generation coil 72 which is a second coil wound around the magnetic core 71, a stator 73 coupled to both ends of the magnetic core 71, a power generation rotor 74 which is a second rotor disposed at an opening of the stator 73 and magnetized to two poles, and a rotor pinion 75 which is integrally formed with the power generation rotor 74. Here, the power generation coil 72 and the speed adjustment coil 46 are disposed at an angle of substantially 90° with respect to each other in a plan view in which the electronically controlled mechanical timepiece 1 is viewed from a surface side. That is, an intersecting angle between a longitudinal direction of the magnetic core 71 around which the power generation coil 72 is wound and a longitudinal direction of the stator 45 around which the speed adjustment coil 46 is wound is substantially 90°.

The second train wheel 60 transmits the rotation of the rotation weight 12 to rotate the power generation rotor 74 which is the second rotor, and includes a gear 61 that meshes with the rotor pinion 75 and a pinion 62 that meshes with the rotation weight pinion 14. The second train wheel 60 may be configured by combining a plurality of gears, and need only be configured to accelerate the rotation of the rotation weight 12 and transmit the rotation to the power generation rotor 74.

The power generation rotor 74 is rotated via the second train wheel 60, which is, for example, a 100-fold acceleration train wheel, by the rotation weight 12 rotating. As a result, a second rotation speed of the power generation rotor 74, which is the second rotor, can be set to, for example, about 100 Hz. The induced electromotive force generated in the power generation coil 72 is represented by Formula 1 below. The faster the power generation rotor 74 is rotated, the larger a change amount of magnetic flux is, thereby obtaining a larger electromotive force. In addition, in Formula 1, e is an induced electromotive force, N is the number of turns of a coil, $d\phi$ is a change amount of magnetic flux, and dt is a change time of the magnetic flux.

$$e = -N \cdot \frac{d\Phi}{dt} \cdots (1)$$

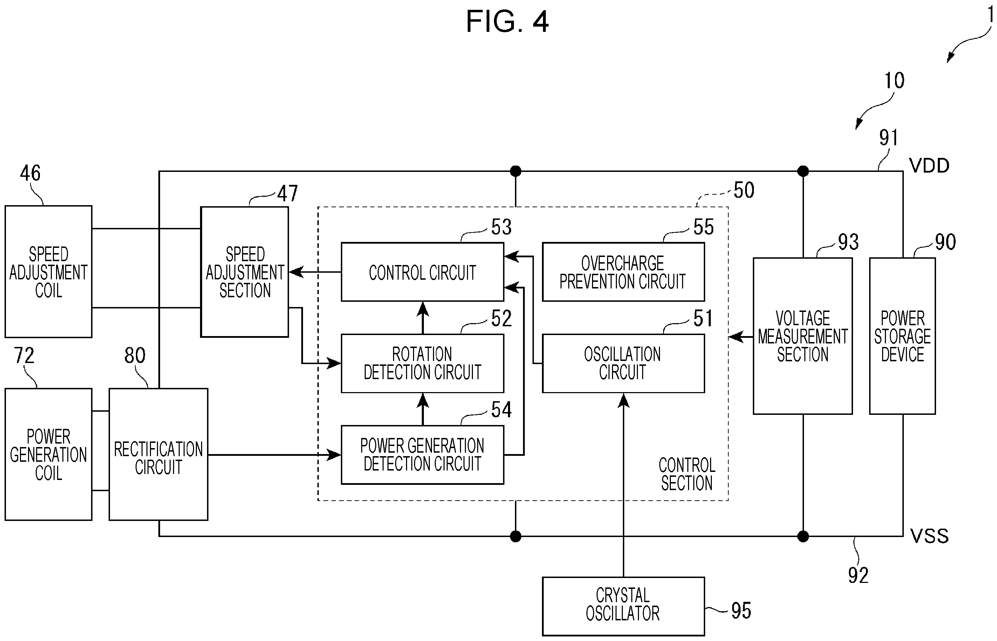

FIG. 4 is a diagram showing a circuit configuration of the movement 10. The movement 10 includes the speed adjustment coil 46 which is the first coil, the power generation coil 72 which is the second coil, the rectification circuit 80 which is coupled to the power generation coil 72 and rectifies an alternating current generated in the power generation coil 72 into a direct current, a speed adjustment section 47 which is coupled to the speed adjustment coil 46 and adjust a speed of the speed adjustment rotor 42 which is the first rotor, the control section 50 which is a control device, the power storage device 90, a voltage measurement section 93, and the crystal oscillator 95. The control section 50 includes an oscillation circuit 51, a rotation detection circuit 52, a control circuit 53, a power generation detection circuit 54, and an overcharge prevention circuit 55.

The control section 50, the rectification circuit 80, the power storage device 90, and the voltage measurement section 93 are coupled to a first power line 91 and a second power line 92. In the present embodiment, a potential of the first power line 91 is VDD, and a potential of the second power line 92 is VSS.

The rectification circuit 80 is a circuit that rectifies the alternating current generated in the power generation coil 72 of the electromagnetic power generator 70 into the direct current, and various rectification circuits for a boost rectification, a full-wave rectification, a half-wave rectification, a transistor rectification, and the like can be used.

The power storage device 90 stores the electric energy generated by the power generation coil 72 of the electromagnetic power generator 70 and rectified by the rectification circuit 80. The electric energy stored in the power storage device 90 is supplied to the control section 50. A consumption current of the control section 50 is about 50 nA. Therefore, the power storage device 90 may be a chip type all-solid-state battery having a capacity of about several tens of µAH. An all-solid-state battery does not require a large space, and battery deterioration is also small, so that long-term reliability can be ensured. The power storage device 90 is not limited to an all-solid-state battery, and may be configured with a secondary battery, a capacitor, or the like.

The voltage measurement section 93 measures a voltage of the power storage device 90 and outputs a detection result to the control section 50. The crystal oscillator 95 is caused to oscillate by the oscillation circuit 51 of the control section 50 and outputs a clock signal having a predetermined frequency. An oscillator that outputs the clock signal is not limited to the crystal oscillator 95, and may be a silicon MEMS oscillator. MEMS is an abbreviation for Micro Electro Mechanical Systems, and when a MEMS oscillator is used, accuracy is inferior to that of the crystal oscillator 95, but a size can be reduced.

The oscillation circuit 51 causes the crystal oscillator 95 to oscillate, and divides an oscillation signal to output a reference clock Fs having a predetermined frequency to the control circuit 53. The frequency of the reference clock is set according to a rotation cycle of the speed adjustment rotor 42 of the speed adjuster 41 that is interlocked with a hand movement speed of a hand, that is, a first rotation speed. For example, when the rotation cycle (first rotation speed) of the speed adjustment rotor 42 in which each hand provided in the first train wheel 30 is accurately moved is 6 Hz, the frequency of the reference clock is also set to 6 Hz, and when the rotation cycle (first rotation speed) of the speed adjustment rotor 42 is 8 Hz, the frequency of the reference clock is also set to 8 Hz. As described above, the second rotation speed of the power generation rotor 74, which is the second rotor, is about 100 Hz, and is a higher speed than the first rotation speed.

The rotation detection circuit 52 is a circuit that measures the rotation cycle of the speed adjustment rotor 42, and is configured with, for example, a waveform shaping circuit and a monostable multivibrator, which are coupled to the speed adjustment section 47 of the speed adjustment device 40. The waveform shaping circuit is configured with an amplifier and a comparator, and converts a sine wave, which is an electromotive voltage waveform, into a rectangular wave. The monostable multivibrator functions as a bandpass filter that allows only pulses having a certain period or less to pass, and outputs a rotation detection signal FG1 from which noise is removed to the control circuit 53. That is, the rotation detection circuit 52 outputs the rotation detection signal FG1 based on the electromotive voltage waveform of the speed adjustment coil 46 which is the first coil.

The control circuit 53 outputs a control signal P1, which is a chopper signal which is generated based on a comparison result obtained by comparing the reference clock Fs input from the oscillation circuit 51 and the rotation detection signal FG1 input from the rotation detection circuit 52 and of which a pulse width is variably controlled, to the speed adjustment section 47. Processing of the control circuit 53 will be described later.

The power generation detection circuit 54 measures a generated voltage of the electromagnetic power generator 70, and is configured with, for example, a comparator that is coupled to the rectification circuit 80 and compares the generated voltage with a threshold voltage. The power generation detection circuit 54 of the present embodiment outputs an L-level signal to the control circuit 53 while power generation is not detected, and outputs an H-level signal to the control circuit 53 while power generation is detected.

When the voltage of the power storage device 90 measured by the voltage measurement section 93 is equal to or higher than a predetermined threshold voltage, the overcharge prevention circuit 55 cuts off a switch provided in the first power line 91 or the second power line 92 for charging the power storage device 90 to prevent overcharge of the power storage device 90.

Speed Adjustment Section

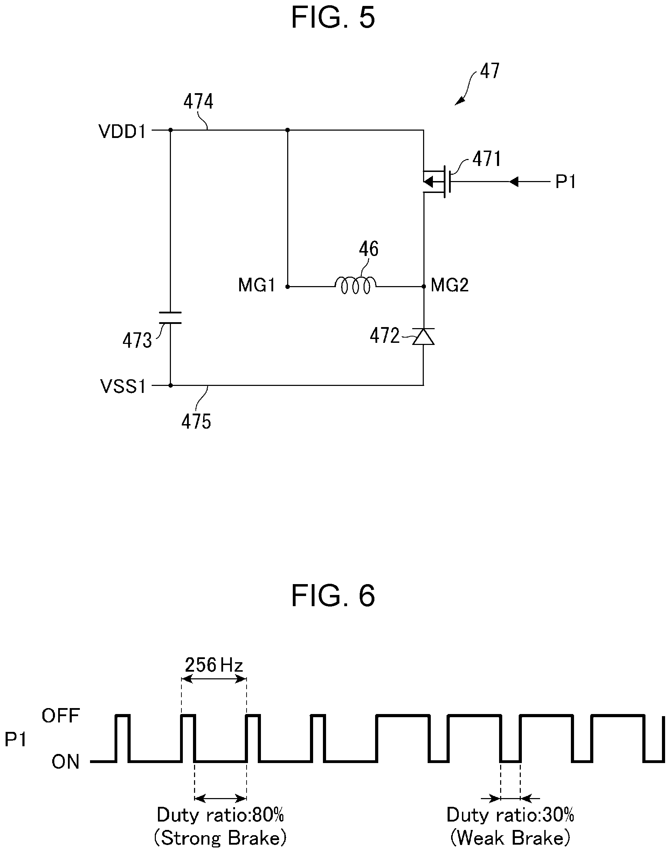

As shown in FIG. 5, the speed adjustment section 47 is a half-wave rectification circuit, and short-circuits the speed adjustment coil 46 of the speed adjuster 41 through chopping to control the rotation speed of the speed adjustment rotor 42, that is, the first train wheel 30, via the speed adjustment coil 46.

The speed adjustment section 47 includes a field-effect transistor 471, a diode 472, and a boost capacitor 473. The boost capacitor 473 is coupled between a first power line 474 and a second power line 475. In the present embodiment, a potential of the first power line 474 is VDD1, and a potential of the second power line 475 is VSS1. The potential VDD1 may be the same as or different from the potential VDD. Similarly, the potential VSS1 may be the same as or different from the potential VSS.

A first terminal MG1 of the speed adjustment coil 46 is coupled to the first power line 474.

The field-effect transistor 471 is configured with a P-channel field-effect transistor coupled between a second terminal MG2 of the speed adjustment coil 46 and the first power line 474, and functions as a switch that cuts and couples the first terminal MG1 and the first power line 474. A gate of the field-effect transistor 471 is coupled to the control circuit 53.

The diode 472 is disposed between the second terminal MG2 of the speed adjustment coil 46 and the second power line 475. The diode 472 need only be a unidirectional element that allows a current to flow in one direction, and a type thereof is not limited, and for example, a Schottky barrier diode or a silicon diode may be used.

In the above speed adjustment section 47, when the speed adjustment rotor 42 of the speed adjustment device 40 rotates via the first train wheel 30 by mechanical energy stored in the mainspring 20, an induced voltage is generated in the speed adjustment coil 46.

In this case, when the field-effect transistor 471 is in an off state and the induced voltage generated in the first terminal MG1 is higher than the induced voltage of the second terminal MG2, a current flows through a path from the first terminal MG1 to the first power line 474, the boost capacitor 473, the second power line 475, the diode 472, and the second terminal MG2, and electric charges are stored in the boost capacitor 473.

In the speed adjustment section 47, chopping control is performed based on the control signal P1, which is a chopper signal from the control circuit 53. The chopping control is control of turning on/off the field-effect transistor 471 at a higher frequency than the rotation of the speed adjustment rotor 42 based on the control signal P1 output from the control circuit 53. Through this control, the short-circuiting and open-circuiting of both ends of the speed adjustment coil 46 are repeated. Since both ends of the speed adjustment coil 46 are short-circuited and a short-circuit state is established during a period in which the field-effect transistor 471 is turned on, a large current flows inside the speed adjustment coil 46. Next, when the field-effect transistor 471 is turned off, a current flowing through the field-effect transistor 471 at that moment is converted into a voltage, and a high induced voltage is generated.

In addition, the control of turning on/off both ends of the speed adjustment coil 46 through the chopping control relates to speed adjustment control of the speed adjustment rotor 42. FIG. 6 shows the control signal P1, which is a brake signal waveform of the chopping control. The field-effect transistor 471 is turned on when the control signal P1 is at an L level and is turned off when the control signal P1 is at an H level. Therefore, a period of the control signal P1 having the L level is a brake period, and a ratio of the brake period to one cycle of the control signal P1 is defined as a duty ratio or a brake duty. That is, the brake duty means a ratio of the brake period to the cycle of the control signal P1. For example, in the control signal P1 in FIG. 6, a chopping cycle is 256 Hz, and a first half signal waveform is a waveform in which a L-level period is 80%, that is, the brake duty is 80%, and a strong brake is applied. A signal waveform of the latter half of the control signal P1 is a waveform in which the L-level period is 30%, that is, the brake duty is 30%, and a weak brake is applied.

Therefore, when the field-effect transistor 471 is turned on by the control signal P1 from the control circuit 53, both ends of the speed adjustment coil 46 are short-circuited to form a closed loop. As a result, an electromagnetic force is generated by the current flowing through the speed adjustment coil 46, and a braking force is applied to the speed adjustment rotor 42. That is, a short brake is applied to the speed adjuster 41, and energy is stored in the speed adjustment coil 46.

On the other hand, when the field-effect transistor 471 is turned off by the control signal P1 from the control circuit 53, the speed adjuster 41 operates, and the power generation is performed including the energy stored in the speed adjustment coil 46 at the time of the short brake, so that the electromotive voltage increases.

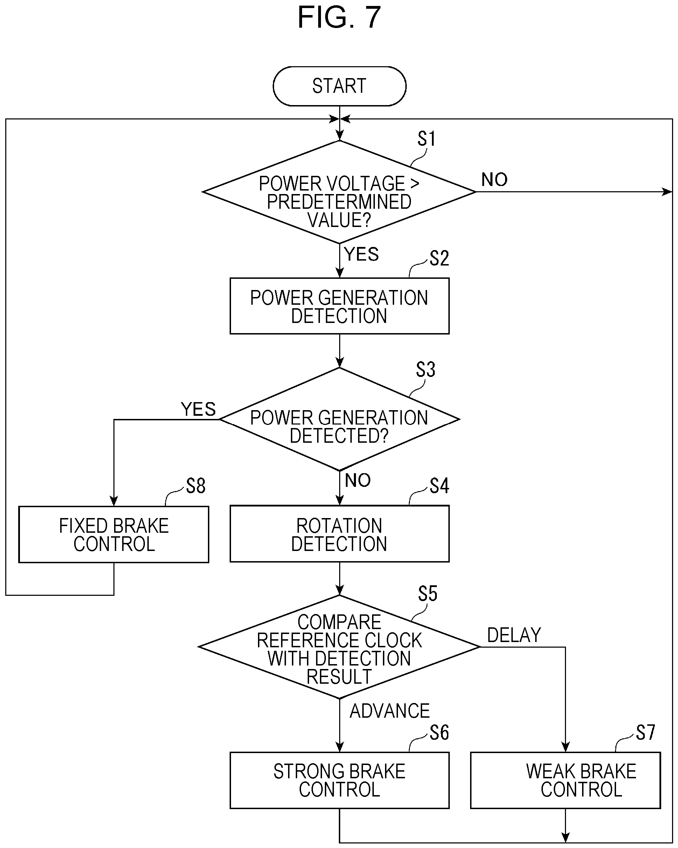

Next, the speed adjustment control through the control section 50 will be described with reference to a flowchart in FIG. 7.

The control section 50 executes step S1 of determining whether or not the voltage of the power storage device 90 measured by the voltage measurement section 93, that is, a power voltage of the control section 50 is larger than a predetermined value. The control section 50 continues step S1 while determining NO in step S1. That is, when a charging voltage of the power storage device 90 is lower than a predetermined voltage, the crystal oscillator 95 may stop oscillating, and thus, the control may not be stable.

When the charging voltage measured by the voltage measurement section 93 is equal to or higher than the predetermined voltage and it is determined YES in step S1, the control section 50 executes step S2 which is power generation detection processing through the power generation detection circuit 54. Next, the control section 50 executes step S3 of determining whether or not the power generation is detected based on the power generation detection processing in step S2.

When it is determined NO in step S3, the control section 50 executes step S4 of executing rotation detection processing through the rotation detection circuit 52. As described above, the rotation detection circuit 52 determines that the rotation of the speed adjustment rotor 42 is detected when a coil voltage generated in the speed adjustment coil 46 exceeds a detection threshold, and changes the rotation detection signal FG1 from an H level to an L level.

Next, the control section 50 executes step S5 of comparing the reference clock Fs input from the oscillation circuit 51 with the rotation detection signal FG1, which is a rotation detection result of the speed adjustment rotor 42, input from the rotation detection circuit 52.

In the present embodiment, the control circuit 53 has an up-down counter, the rotation detection signal FG1 is input to up count input of the up-down counter, and the reference clock Fs is input to down count input. The up-down counter is, for example, a 4-bit counter, and is initialized and set to an initial count value "11" at a time of system reset or power-on. Then, when the rotation detection signal FG1 changes from the H level to the L level, the count value of the up-down counter is incremented by 1, and when the reference clock Fs changes from an H level to an L level, the count value of the up-down counter is decremented by 1. The control circuit 53 determines "advance" in step S5 when the count value of the up-down counter is larger than the initial count value "11", and determines "delay" in step S5 when the count value of the up-down counter is equal to or less than the initial count value "11".

When the advance in the rotation of the speed adjustment rotor 42 is detected in step S5, the control section 50 executes strong brake control in step S6. Further, when the delay in the rotation of the speed adjustment rotor 42 is detected in step S5, the control section 50 executes weak brake control in step S7.

The control circuit 53 outputs the control signal P1, in which the brake duty is 80%, during the strong brake control in step S6. Therefore, a brake-on time in a reference cycle is increased, and the strong brake control is performed on the speed adjuster 41. However, the brake is turned off at a constant cycle, so that the chopping control is performed, and braking torque can be improved while ensuring the induced voltage.

The control circuit 53 outputs the control signal P1, in which the brake duty is 30%, during the weak brake control in step S7. Therefore, the brake-on time in the reference cycle is shortened, and the brake is less likely to be applied to the speed adjuster 41, that is, the weak brake control is performed.

Then, the control section 50 returns to step S1 and continues the control after the execution of the brake control in step S6 or step S7.

Further, when it is determined YES in step S3, the control section 50 executes fixed brake control in step S8. The control circuit 53 continues the brake control that is performed immediately before transition to the fixed brake control during the fixed brake control in step S8. That is, when the immediately preceding brake control is the strong brake control in step S6, the control circuit 53 outputs the control signal P1, in which the brake duty is 80%, as a fixed chopper signal during the fixed brake control in step S8. In addition, when the immediately preceding brake control is the weak brake control in step S7, the control circuit 53 outputs the control signal P1, in which the brake duty is 30%, as the fixed chopper signal during the fixed brake control in step S8.

After the fixed brake control in step S8 is executed, the control section 50 returns to step S1 and continues the control.

The power generation through the electromagnetic power generator 70 occurs only when the rotation weight 12 rotates by moving the arm equipped with the electronically controlled mechanical timepiece 1. Therefore, while the electronically controlled mechanical timepiece 1 is operating, a time in which power generation does not occur is longer than a time in which power generation occurs. Further, in a quartz timepiece that performs the speed adjustment control based on the reference signal output from the crystal oscillator 95, a main factor of changing the accuracy of the timepiece is a variation in the reference signal due to a temperature change. The general tuning fork type crystal oscillator 95 has a quadratic temperature characteristic curve having a peak at substantially 25°C, and a temperature inside the timepiece in a state of being equipped on the arm of the user is around 25°C, and thus the temperature does not change much. Therefore, the accuracy is stable, and there is almost no problem in accuracy even when the speed adjustment control is stopped and the fixed brake control is performed while the timepiece is being carried.

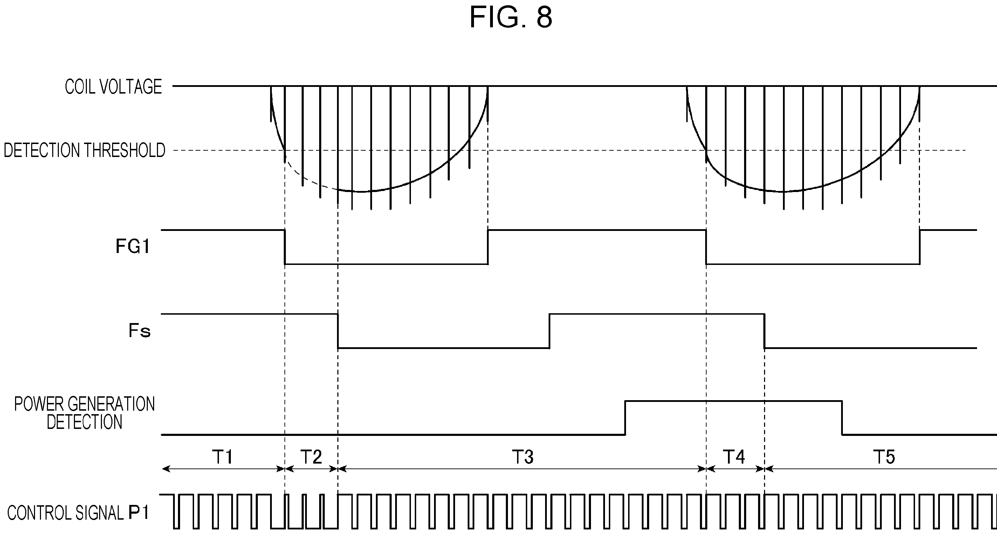

FIG. 8 is a waveform diagram showing each signal and the induced voltage of the speed adjustment coil 46 when the speed adjustment control is performed by the control section 50. When the speed adjustment rotor 42 rotates via the first train wheel 30 with the torque from the mainspring 20, an induced voltage, that is, the coil voltage is generated in the speed adjustment coil 46 in conjunction with the rotation. The coil voltage gradually increases with the rotation of the speed adjustment rotor 42, and then gradually decreases. In addition, the control circuit 53 outputs the control signal P1 to the field-effect transistor 471 of the speed adjustment section 47. At a timing when the control signal P1 changes from the L level to the H level, that is, when the field-effect transistor 471 is switched from on to off and both ends of the speed adjustment coil 46 are released from the short-circuited state, the electromotive force due to a self-induction action is added to the induced voltage, and a large electromotive force is generated.

The rotation detection circuit 52 sets the rotation detection signal FG1 to be output to the control circuit 53 to the H level when it is detected that a terminal voltage of the speed adjustment coil 46, that is, the coil voltage is lower than the predetermined detection threshold, and sets the rotation detection signal FG1 to the L level when it is detected that the coil voltage is the detection threshold or higher. Therefore, the control circuit 53 can detect that the speed adjustment rotor 42 rotates because the rotation detection signal FG1 changes from the H level to the L level. Meanwhile, the reference clock Fs output from the oscillation circuit 51 to the control circuit 53 is a signal having a constant frequency, for example, 6 Hz.

Therefore, as described above, the control circuit 53 can determine the rotation of the speed adjustment rotor 42, that is, whether the hour hand 4, the minute hand 5, and the seconds hand 6 moved by the first train wheel 30 are delayed or advanced, by the count value of the up-down counter changing at a timing when the rotation detection signal FG1 changes from the H level to the L level and a timing when the reference clock Fs changes from the H level to the L level. In the example in FIG. 8, the count value of the up-down counter is "12" at the timing when the rotation detection signal FG1 changes from the H level to the L level, and the count value of the up-down counter is "11" at the timing when the reference clock Fs changes from the H level to the L level. Therefore, the strong brake control in step S6 is executed in a period T2, and the weak brake control in step S7 is executed in periods T1 and T3 before and after the period T2.

In addition, the fixed brake control in step S8 is executed in a period in which the power generation is detected by the power generation detection circuit 54 and the power generation detection signal is at an H level. In FIG. 8, since the power generation is detected in the middle of the period T3 during the weak brake control, the control circuit 53 continues to output the immediately preceding control signal P1 for the weak brake control as the fixed brake control.

The next period T4 is a period in which the count value of the up-down counter is "12" and the rotation of the speed adjustment rotor 42 is advanced, as in the period T2. However, since the power generation is detected, the control circuit 53 continues the fixed brake control.

In the next period T5, the count value of the up-down counter is "11". Since the power generation is detected at the beginning of the period T5, the output of the immediately preceding control signal P1 for the weak brake control is continued as the fixed brake control. Then, since the power generation is not detected in the middle of the period T5 and it is determined NO in step S3, the normal rotation control after step S4 is performed. In FIG. 8, since the count value of the up-down counter is "11" in the period T5 and it is determined "delay" in step S5, the weak brake control in step S7 is performed.

When the power generation detection signal changes from the H level to an L level, that is, when the power generation is not detected, in the period in which the rotation of the speed adjustment rotor 42 is advanced, that is, the period in which the count value of the up-down counter is "12" or more, it is determined "advance" in step S5, and thus the strong brake control in step S6 is performed.

Effects of First Embodiment

With the electronically controlled mechanical timepiece 1 of the first embodiment, since the speed adjustment device 40 using the speed adjuster 41 dedicated for speed adjustment and the electromagnetic power generator 70 dedicated for power generation are provided, the power generation rotor 74 can be rotated at a high speed, and power generation performance can be improved as compared with a case where a power generator used for both power generation and speed adjustment is provided. Therefore, it is not necessary to increase a size of the power generation coil 72 of the electromagnetic power generator 70. In addition, the speed adjustment coil 46 of the speed adjuster 41 is dedicated for speed adjustment, and the number of turns does not need to be increased for power generation, so that it is not necessary to increase a size of the speed adjustment coil 46. Therefore, it is not necessary to increase a size of the speed adjustment coil 46 which is the first coil and the power generation coil 72 which is the second coil, and a degree of freedom in a layout of the components can be improved.

Further, since a power generation capability of the electromagnetic power generator 70 can be improved, a drive voltage of an integrated circuit that configures the control section 50 can also be relatively increased. Therefore, it is not necessary to use a high-cost integrated circuit having low power consumption and manufactured by a special process as a component such as an integrated circuit, and a low-cost integrated circuit manufactured by a general-purpose process can be used.

The mainspring 20 can be wound by the rotation weight 12 and the winding train wheel 15, and the electromagnetic power generator 70 can be operated by the rotation weight 12 and the second train wheel 60. Therefore, when the user equips and uses the electronically controlled mechanical timepiece 1 on a wrist or the like, the winding of the mainspring 20 and the power generation by the electromagnetic power generator 70 can be automatically performed. Therefore, the user does not need to manually wind up the mainspring 20 or operate the electromagnetic power generator 70, and convenience can be improved.

In addition, since the power generation rotor 74 is dedicated for power generation, a speed increasing ratio of the second train wheel 60 that transmits the rotation of the rotation weight 12 to the power generation rotor 74 can be set to a speed increasing ratio with which it is possible to maximize the power generation capability of the electromagnetic power generator 70, and a high power generation capability can be obtained.

The power generation detection circuit 54 that detects a power generation state of the electromagnetic power generator 70 is provided, and the control circuit 53 executes the fixed brake control while the power generation is detected to stop the control of the rotation speed. Therefore, it is possible to prevent an electromagnetic noise generated during the power generation from being erroneously detected as the rotation detection signal or the like, and to prevent an indicated time of the hands from being greatly deviated because of the erroneous detection. In addition, since the fixed brake control is performed while the power generation is detected, the rotation speed of the speed adjustment coil 46 can be appropriately controlled, and the hour hand 4, the minute hand 5, and the seconds hand 6 can also be operated with almost no deviation in the indicated time.

In the fixed brake control, since the control is performed by using the control signal P1 having a pulse width that is present immediately before the power generation is detected, the speed adjustment control that is performed immediately before the detection of the power generation state can be continued, and the rotation speed of the speed adjustment rotor 42 can be appropriately controlled.

The speed adjustment coil 46 of the speed adjuster 41 and the power generation coil 72 of the electromagnetic power generator 70 are disposed at an angle of substantially 90° with respect to each other. Therefore, electromagnetic coupling between the speed adjustment coil 46 and the power generation coil 72 can be weakened, and it is possible to avoid the electromagnetic noise generated from the power generation coil 72 during power generation jumping into the speed adjustment coil 46 and the rotation detection being erroneously performed.

Since the electromagnetic power generator 70 including the power generation coil 72 and the power generation rotor 74 is provided as a power generation mechanism, it is not necessary to provide a dial made of a light-transmissive synthetic resin for using a solar panel, and a dial made of metal can be used, so that it is possible to improve an appearance design of the timepiece.

Second Embodiment

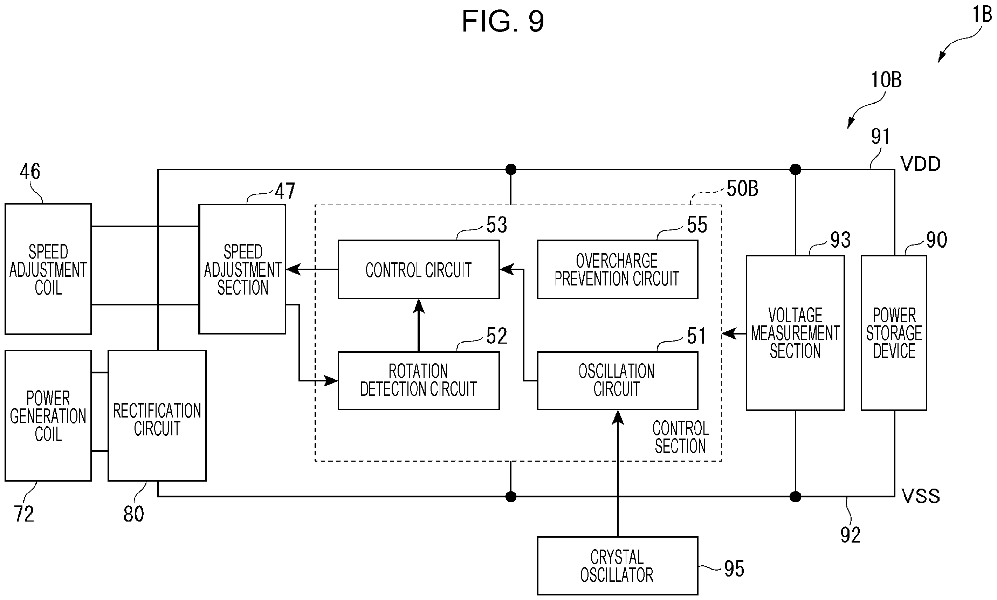

An electronically controlled mechanical timepiece 1B of a second embodiment differs from the first embodiment in that the control section 50B of the movement 10B does not include the power generation detection circuit 54, as shown in FIG. 9. Therefore, in the movement 10B, the same configuration as that of the movement 10 of the first embodiment is denoted by the same reference numeral, and the description thereof will be omitted.

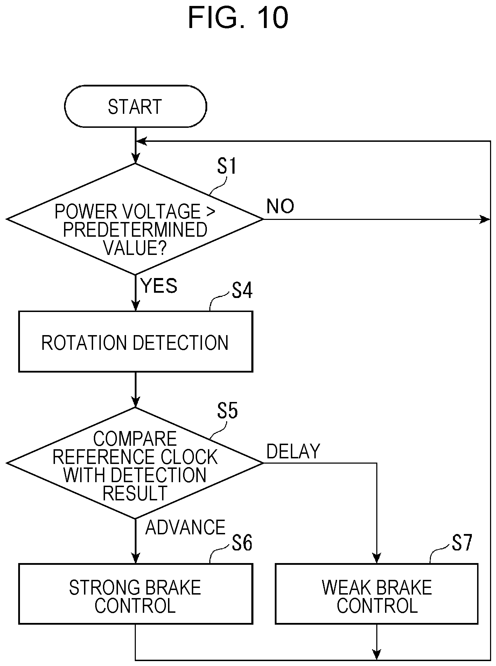

In the movement 10B of the second embodiment, since the control section 50B does not include the power generation detection circuit 54, when it is detected that the power voltage is higher than the predetermined value in step S1 as shown in a flowchart of FIG. 10, the rotation detection circuit 52 performs the rotation detection processing in step S4. The control section 50B compares the reference clock Fs with the rotation detection signal FG1 in step S5, executes the strong brake control in step S6 when the rotation detection signal FG1 is advanced, and executes the weak brake control in step S7 when the rotation detection signal FG1 is delayed.

Effects of Second Embodiment

With the electronically controlled mechanical timepiece 1B of the second embodiment, the same effects as those of the electronically controlled mechanical timepiece 1 of the first embodiment can be obtained. Further, although the control section 50B does not include the power generation detection circuit 54, the speed adjustment coil 46 of the speed adjuster 41 and the power generation coil 72 of the electromagnetic power generator 70 are disposed at an angle of substantially 90° with respect to each other, as in the electronically controlled mechanical timepiece 1 of the first embodiment. Therefore, even in the control section 50B that does not include the power generation detection circuit 54, the electromagnetic coupling between the speed adjustment coil 46 and the power generation coil 72 can be weakened, and it is possible to avoid the electromagnetic noise generated from the power generation coil 72 during power generation jumping into the speed adjustment coil 46 and the rotation detection being erroneously performed.

Third Embodiment

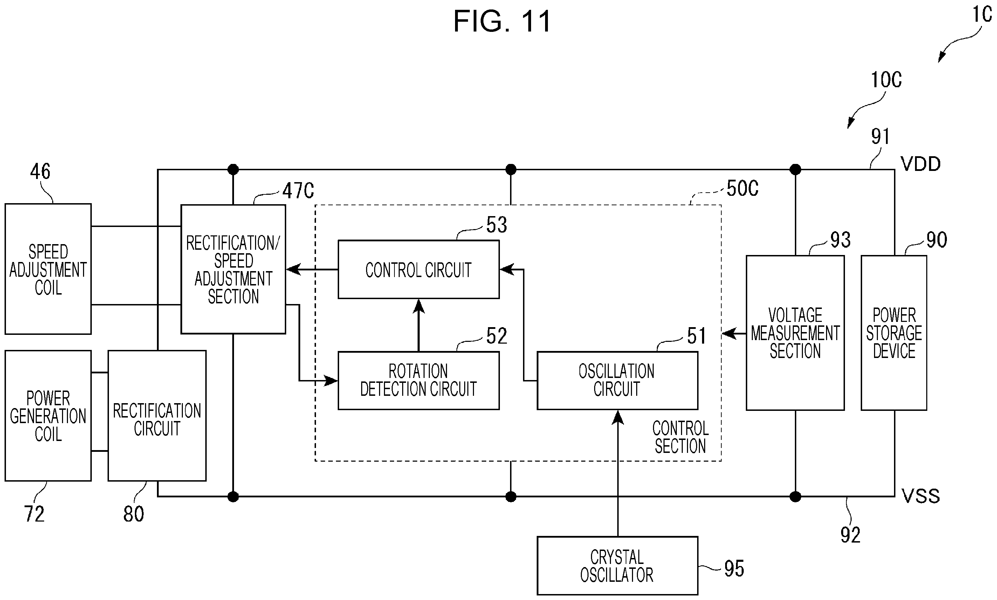

As shown in FIG. 11, the electronically controlled mechanical timepiece 1C of the third embodiment is different from the first and second embodiments in that a movement 10C is provided with a rectification/speed adjustment section 47C coupled to the speed adjustment coil 46, the rectification/speed adjustment section 47C is coupled to the first power line 91 and the second power line 92, and the control section 50C includes the oscillation circuit 51, the rotation detection circuit 52, and the control circuit 53, and does not include the power generation detection circuit 54 and the overcharge prevention circuit 55.

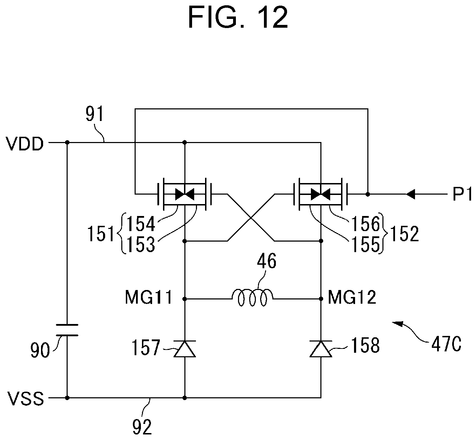

As shown in FIG. 12, the rectification/speed adjustment section 47C includes a first switch 151, a second switch 152, and diodes 157 and 158.

The first switch 151 is configured with P-channel field-effect transistors 153 and 154 coupled between a first terminal MG11 of the speed adjustment coil 46 and the first power line 91. The field-effect transistors 153 and 154 are coupled to each other in parallel, a gate of the field-effect transistor 153 is coupled to a second terminal MG12 of the speed adjustment coil 46, and a gate of the field-effect transistor 154 is coupled to the control circuit 53.

The second switch 152 is configured with P-channel field-effect transistors 155 and 156 coupled between the second terminal MG12 and the first power line 91. The field-effect transistors 155 and 156 are coupled to each other in parallel, a gate of the field-effect transistor 155 is coupled to the first terminal MG11, and a gate of the field-effect transistor 156 is coupled to the control circuit 53.

Therefore, the speed adjustment coil 46, which is the first coil, is electrically coupled to the power storage device 90 via the first switch 151, the second switch 152, the diodes 157 and 158 of the rectification/speed adjustment section 47C.

Since the gate of the field-effect transistor 153 of the first switch 151 is coupled to the second terminal MG12 and the gate of the field-effect transistor 155 of the second switch 152 is coupled to the first terminal MG11, when an induced electromotive force is generated in the speed adjustment coil 46, among the field-effect transistors 153 and 155, the transistor coupled to the low potential terminal of the speed adjustment coil 46 is turned on, and the transistor coupled to the high potential terminal is turned off.

The field-effect transistor 154 of the first switch 151 and the field-effect transistor 156 of the second switch 152 are controlled to be turned on or off at the same time, as the chopping control is executed by the control signal P1 output from the control circuit 53 being input into the gates. Therefore, the field-effect transistors 154 and 156 short-circuit the first terminal MG11 and the second terminal MG12 of the speed adjustment coil 46.

The diodes 157 and 158 are disposed between the first terminal MG11 and the second terminal MG12 of the speed adjustment coil 46 and the second power line 92. The diodes 157 and 158 need only be a unidirectional element that allows a current to flow in one direction, and a type thereof is not limited, and for example, a Schottky barrier diode or a silicon diode may be used.

Since the rectification/speed adjustment section 47C of the electronically controlled mechanical timepiece 1C is a full-wave rectification circuit as shown in FIG. 12, it is possible to generates electric energy with the speed adjustment coil 46 through the rotation of the speed adjustment rotor 42 to charge the power storage device 90. In addition, after the field-effect transistors 154 and 156 are turned on by the control signal P1 to apply an electromagnetic brake, a chopper-boosted voltage is generated in the speed adjustment coil 46 through chopping control that turns off the field-effect transistors 154 and 156, and the power storage device 90 can be charged with the generated voltage. Therefore, the rectification/speed adjustment section 47C functions as a charging circuit of the power storage device 90.

Effects of Third Embodiment

With the electronically controlled mechanical timepiece 1C of the third embodiment, the same effects as those of the electronically controlled mechanical timepiece 1 of the first embodiment can be obtained. Further, since the rectification/speed adjustment section 47C is provided instead of the speed adjustment section 47, the electric energy generated by the speed adjuster 41 can be charged to the power storage device 90 in addition to the electric energy generated by the electromagnetic power generator 70. That is, the speed adjuster 41 can be used as a speed adjuster and power generator, a power generation capability of the electronically controlled mechanical timepiece 1C can be improved, and a time required for charging the power storage device 90 can be shortened.

In the electronically controlled mechanical timepiece 1C, the control section 50C may include the power generation detection circuit 54 and the overcharge prevention circuit 55.

Fourth Embodiment

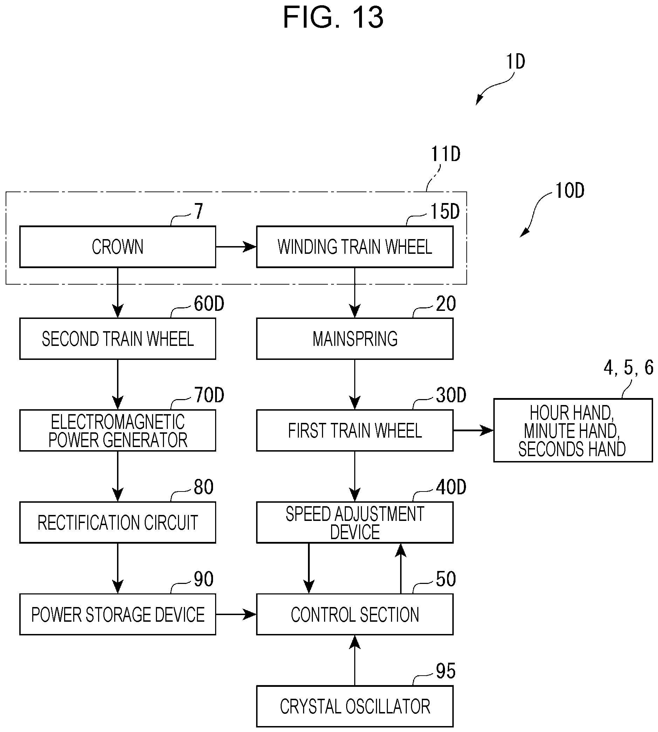

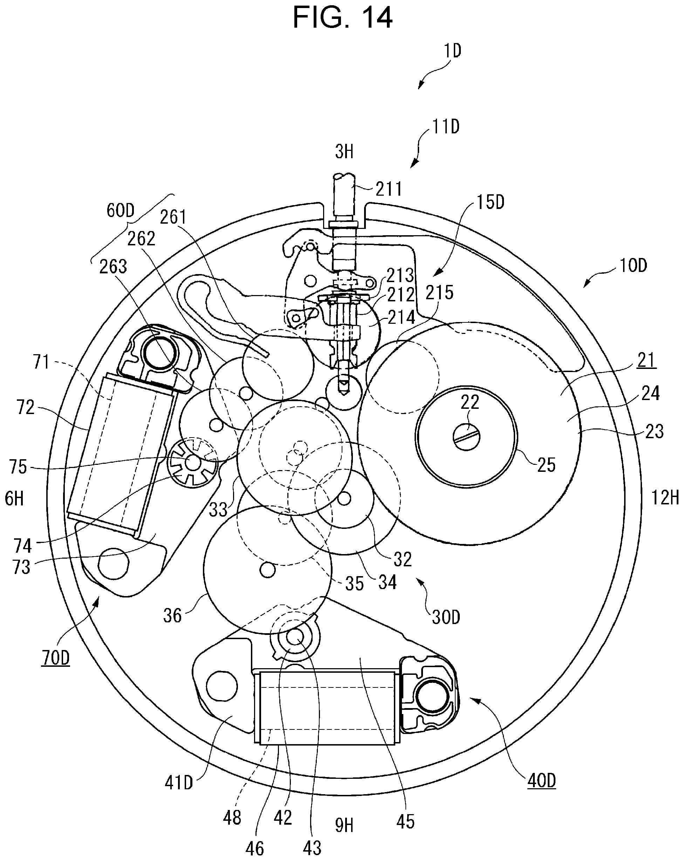

As shown in FIGS. 13 and 14, an electronically controlled mechanical timepiece 1D of a fourth embodiment performs the winding of the mainspring 20 and the power generation of the electromagnetic power generator 70 with the crown 7 instead of the rotation weight 12. Therefore, the same or corresponding configurations as those of the electronically controlled mechanical timepiece 1 of the first embodiment are denoted by the same reference numerals, and the description thereof will be omitted or simplified.

A movement 10D of the electronically controlled mechanical timepiece 1D is provided with a manual winding mechanism 11D that winds the mainspring 20. The manual winding mechanism 11D is configured with the crown 7 and a winding train wheel 15D. As shown in FIG. 14, the winding train wheel 15D includes a winding stem 211, a clutch wheel 212, a winding pinion 213, a crown wheel 214, and an intermediate ratchet wheel 215. When the crown 7 fixed to the winding stem 211 is rotated, the ratchet wheel 25 and the barrel stem 22 are rotated via the winding train wheel 15D, and the mainspring 20 is wound.

A first train wheel 30D is configured by including the center wheel and pinion 32, the third wheel and pinion 33, the fourth wheel and pinion 34, the fifth wheel and pinion 35, and the sixth wheel and pinion 36, in the same manner as the first train wheel 30.

A speed adjuster 41D of a speed adjustment device 40D includes the speed adjustment rotor 42 which is the first rotor, the rotor pinion 43, the stator 45, the speed adjustment coil 46 which is the first coil, and a magnetic core 48. Both ends of the magnetic core 48 around which the speed adjustment coil 46 is wound are coupled to the stator 45. The speed adjustment rotor 42 rotates by the rotor pinion 43 meshing with the sixth wheel and pinion 36.

The second train wheel 60D includes a first transmission wheel 261 that meshes with the crown wheel 214, a second transmission wheel 262 that includes a pinion that meshes with the first transmission wheel 261, and a third transmission wheel 263 that includes a pinion that meshes with the second transmission wheel 262.

An electromagnetic power generator 70D includes the magnetic core 71, the power generation coil 72 which is the second coil, the stator 73, the power generation rotor 74 which is the second rotor, and the rotor pinion 75. The rotor pinion 75 meshes with the third transmission wheel 263, and the power generation rotor 74 is rotated by the second train wheel 60D.

The intermediate ratchet wheel 215 and the first transmission wheel 261 may be configured to be rotated at the same time by the crown wheel 214, but it is preferable that one of the intermediate ratchet wheel 215 and the first transmission wheel 261 is selectively rotated according to a rotation direction of the crown wheel 214. That is, it is preferable that the intermediate ratchet wheel 215 is configured to transmit the rotation of the crown wheel 214 to the ratchet wheel 25 only when the crown wheel 214 rotates in a first direction, and the first transmission wheel 261 is configured to transmit the rotation of the crown wheel 214 to the second transmission wheel 262 only when the crown wheel 214 rotates in a second direction opposite to the first direction.

Therefore, when the crown 7 is rotated in one direction of a clockwise direction or a counterclockwise direction at a 0-stage position, the crown wheel 214, the intermediate ratchet wheel 215, and the ratchet wheel 25 rotate, and the mainspring 20 is wound. In addition, when the crown 7 is rotated in the other direction of the clockwise direction or the counterclockwise direction at the 0-stage position, the crown wheel 214, the first transmission wheel 261, the second transmission wheel 262, the third transmission wheel 263, and the power generation rotor 74 are rotated, and the power is generated by the power generation coil 72. The power generation rotor 74 uses a 6-pole rotor provided with three N poles and three S poles, and can increase a power generation frequency and obtain a higher electromotive voltage as compared with a case where a 2-pole rotor is used.

A configuration may be adopted, in which power generation of the electromagnetic power generator 70D and the winding of the mainspring 20 can be selected depending on a pulling-out position of the crown 7. For example, when the crown 7 is rotated at the 0-stage position, the power generation rotor 74 is rotated via the second train wheel 60D to generate power, and when the crown 7 is rotated at the 1-stage position where the crown 7 is pulled out by one stage, the mainspring 20 may be wound via the winding train wheel 15D.

Effects of Fourth Embodiment

With the electronically controlled mechanical timepiece 1D of the fourth embodiment, the same effect as that of the electronically controlled mechanical timepiece 1 of the first embodiment can be obtained because the speed adjuster 41D and the electromagnetic power generator 70D are provided. Further, the user can perform the winding of the mainspring 20 and the power generation through the electromagnetic power generator 70D by operation the crown 7. Therefore, the user can reliably wind the mainspring 20 and generate power by operating the crown 7 without equipping the electronically controlled mechanical timepiece 1D. Modification Example

The present disclosure is not limited to the above embodiments, and various modifications can be made within the scope of the gist of the present disclosure.

In the first to third embodiments, the winding of the mainspring 20 and the power generation of the electromagnetic power generator 70 are performed by the automatic winding mechanism 11 using the rotation weight 12, and in the fourth embodiment, the winding of the mainspring 20 and the power generation of the electromagnetic power generator 70D are performed by the manual winding mechanism 11D using the crown 7. However, a winding mechanism of the mainspring 20 and a mechanism for causing the electromagnetic power generators 70 and 70D to generate power are not limited to the configurations of the respective embodiments.

For example, the winding of the mainspring 20 may be performed by both the automatic winding mechanism 11 using the rotation weight 12 and the manual winding mechanism 11D using the crown 7, and the power generation of the electromagnetic power generator 70 may be performed by the rotation weight 12. In addition, the winding of the mainspring 20 may be performed by both the automatic winding mechanism 11 using the rotation weight 12 and the manual winding mechanism 11D using the crown 7, and the power generation of the electromagnetic power generator 70 may be manually performed using the crown 7.

Also in the third and fourth embodiments, the power generation detection circuit 54 may be provided and the fixed brake control may be performed while the power generation is detected. In the fixed brake control in step S8, the chopper signal of the immediately preceding brake duty was used as the control signal P1 which is the fixed chopper signal, but a chopper signal of a predetermined brake duty may be used. For example, when a chopper signal, in which the brake duty is 80%, is used for the strong brake control and a chopper signal, in which the brake duty is 30%, is used for the weak brake control, a chopper signal, in which the brake duty is 55%, may be used for the fixed brake control. The brake duty of the fixed chopper signal for the fixed brake control is not limited to 55%, and may be 40%, 50%, or the like, and may be appropriately set according to the movement.

The control circuit 53 selects a signal from among two types of chopper signals, that is, the chopper signal for the strong brake control, in which the brake duty is 80%, and the chopper signal for the weak brake control, in which the brake duty is 30%, and outputs the signal, but may select a signal from among three or more types of chopper signals and output the signal. For example, a configuration may be adopted, in which a chopper signal, in which the brake duty is 40%, is output when the count value of the up-down counter of the control circuit 53 is "11", and a chopper signal, in which the brake duty is 30%, is output when the count value is equal to or less than "10", a chopper signal, in which the brake duty is 70%, is output when the count value is "12", and a chopper signal, in which the brake duty is 80%, is output when the count value is equal to or larger than "13".

The speed adjustment device for adjusting a speed of the first train wheel 30 is not limited to the speed adjustment device that performs the speed adjustment control on the rotation speed of the speed adjustment rotor 42 that operates in conjunction with the first train wheel 30 as in each of the embodiments. For example, the first train wheel 30 may be applied to an electronically controlled mechanical timepiece in which speed adjustment is performed using an escape wheel and pinion, a pallet fork, and a balance, and a speed of an operation of the balance is adjusted by detecting oscillation of the balance. Specifically, rotation of a rotor, that is, a rotation speed of the balance may be adjusted with high accuracy by attaching the rotor of a speed adjuster to a balance stem of the balance and performing chopping control on a speed adjustment coil.

Summary

An electronically controlled mechanical timepiece according to the present disclosure includes: a mainspring; a winding mechanism that winds the mainspring; a first train wheel that transmits mechanical energy of the mainspring; a hand that is driven by the first train wheel to display a time; a speed adjustment device that controls a rotation speed of the first train wheel; a control device that outputs a control signal for controlling the rotation speed to the speed adjustment device; a power generation mechanism that generates electric energy in conjunction with the winding mechanism; and a power storage device that stores the electric energy generated by the power generation mechanism, in which the control device and the speed adjustment device operate with the electric energy stored in the power storage device, the speed adjustment device includes a first rotor that rotates in conjunction with the first train wheel, and a first coil that generates an electromagnetic force to be applied to the first rotor to control the rotation speed of the first train wheel in accordance with the control signal, and the power generation mechanism includes a second train wheel that accelerates motion of the winding mechanism in conjunction with the winding mechanism, a second rotor that rotates in conjunction with the second train wheel, and a second coil that generates the electric energy with rotation of the second rotor.

According to the electronically controlled mechanical timepiece of the present disclosure, the power generation mechanism generates the electric energy with the second rotor rotating via the second train wheel that accelerates the motion of the winding mechanism. Since the power generation mechanism is provided in a separate system from the speed adjustment device that controls the first train wheel driven by the mainspring wound by the winding mechanism, the second rotor can be rotated at a high speed and a power generation capability can be improved as compared with a case where a power generator used for both power generation and speed adjustment is provided. Therefore, it is not necessary to increase a size of the second coil of the power generation mechanism. In addition, the first coil of the speed adjustment device is also provided for speed adjustment, and the number of turns does not need to be increased for power generation, so that a size of the first coil does not need to be increased. Therefore, it is not necessary to increase the size of the first coil and the size of the second coil, and a degree of freedom in a layout of the components can be increased.

In addition, the power generation capability of the power generation mechanism can be improved, and thus, a drive voltage of an integrated circuit that configures a control section can also be relatively increased. Therefore, it is not necessary to use a high-cost integrated circuit having low power consumption and manufactured by a special process as a component such as an integrated circuit, and a low-cost integrated circuit manufactured by a general-purpose process can be used.

In the electronically controlled mechanical timepiece according to the present disclosure, it is preferable that the speed adjustment device controls a rotation speed of the first rotor such that the rotation speed is a first rotation speed, and a second rotation speed, which is a rotation speed of the second rotor during a winding operation of the winding mechanism, is a higher speed than the first rotation speed.

With the electronically controlled mechanical timepiece according to the present disclosure, a power generation capability of the second coil can be improved since the second rotation speed, which is the rotation speed of the second rotor, is higher than the first rotation speed, which is the rotation speed of the first rotor. That is, the first rotation speed is usually set to 6 Hz, 8 Hz, or the like in order to move the hand driven by the first train wheel at a predetermined reference speed. Meanwhile, since there is no constraint such as speed adjustment, the second rotation speed can be set to, for example, 100 Hz or the like, which is a dozen times the first rotation speed, and the power generation capability of the power generation mechanism can be improved.

In the electronically controlled mechanical timepiece according to the present disclosure, the winding mechanism may include a rotation weight, and a winding train wheel that transmits rotation of the rotation weight.

With the electronically controlled mechanical timepiece of the present disclosure, since the winding mechanism including the rotation weight and the winding train wheel is used, the winding of the mainspring and the power generation of the power generation mechanism can be automatically performed by rotating the rotation weight by shaking the electronically controlled mechanical timepiece equipped on an arm or the like, and convenience can be improved.

In the electronically controlled mechanical timepiece according to the present disclosure, the winding mechanism includes a crown, and a winding train wheel that transmits rotation of the crown.

With the electronically controlled mechanical timepiece of the present disclosure, since the winding mechanism including the crown and the winding train wheel is used, the winding of the mainspring and the power generation of the power generation mechanism can be performed by a user manually operating the crown. Therefore, the user can reliably wind the mainspring and generate power by operating the crown before equipping and using the electronically controlled mechanical timepiece on the arm.

In the electronically controlled mechanical timepiece according to the present disclosure, it is preferable that a power generation detection circuit that detects a power generation state of the power generation mechanism is provided, and the speed adjustment device executes processing of stopping the control of the rotation speed while power generation is detected by the power generation detection circuit.

With the electronically controlled mechanical timepiece of the present disclosure, since the speed adjustment device stops the control of the rotation speed while the power generation is detected by the power generation detection circuit, it is possible to prevent erroneous detection in which a noise during the power generation is detected as the rotation.

In the electronically controlled mechanical timepiece according to the present disclosure, it is preferable that the control signal is a chopper signal which is generated based on a comparison result obtained by comparing a rotation detection signal, which is based on an electromotive voltage waveform of the first coil, with a reference signal and of which a pulse width is variably controlled, and the processing of stopping the control of the rotation speed outputs a fixed chopper signal of which variable control is stopped as the control signal.

With the electronically controlled mechanical timepiece of the present disclosure, since the fixed chopper signal is output as the control signal while the power generation is detected by the power generation detection circuit, the rotation speed of the first rotor can be appropriately controlled.

In the electronically controlled mechanical timepiece according to the present disclosure, a pulse width of the fixed chopper signal may be set to a pulse width that is present immediately before the control of the rotation speed is stopped.

With the electronically controlled mechanical timepiece of the present disclosure, since the pulse width of the fixed chopper signal is set to the immediately preceding pulse width, the speed adjustment control that is performed immediately before the detection of the power generation state can be continued, and the rotation speed of the first rotor can be appropriately controlled.

In the electronically controlled mechanical timepiece according to the present disclosure, a pulse width of the fixed chopper signal may be set to a predetermined fixed pulse width.

With the electronically controlled mechanical timepiece of the present disclosure, since the pulse width of the fixed chopper signal is set to the predetermined fixed pulse width, the average speed adjustment control can be continued even while the power generation state is detected, and the rotation speed of the first rotor can be appropriately controlled.

In the electronically controlled mechanical timepiece according to the present disclosure, it is preferable that the first coil is electrically coupled to the power storage device, and the speed adjustment device includes a charging circuit that charges the power storage device by boosting the electric energy generated by the first coil through chopping control of short-circuiting terminals of the first coil based on the control signal and that controls the rotation speed of the first train wheel via the first coil.

With the electronically controlled mechanical timepiece of the present disclosure, since the speed adjustment device includes the charging circuit, it is possible to charge the power storage device by generating power in both the power generation mechanism and the charging circuit of the speed adjustment device. Therefore, the power generation capability in the electronically controlled mechanical timepiece can be improved, and a time required for charging the power storage device can be shortened.

**Claims**

1. An electronically controlled mechanical timepiece comprising:

   a mainspring;
   a winding mechanism that winds the mainspring;
   a first train wheel that transmits mechanical energy of the mainspring;
   a hand that is driven by the first train wheel to display a time;
   a speed adjustment device that controls a rotation speed of the first train wheel;
   a control device that outputs a control signal for controlling the rotation speed to the speed adjustment device;
   a power generation mechanism that generates electric energy in conjunction with the winding mechanism; and
   a power storage device that stores the electric energy generated by the power generation mechanism, wherein
   the control device and the speed adjustment device operate with the electric energy stored in the power storage device,
   the speed adjustment device includes

      a first rotor that rotates in conjunction with the first train wheel, and
      a first coil that generates an electromagnetic force to be applied to the first rotor to control the rotation speed of the first train wheel in accordance with the control signal, and

   the power generation mechanism includes

      a second train wheel that accelerates motion of the winding mechanism in conjunction with the winding mechanism,
      a second rotor that rotates in conjunction with the second train wheel, and
      a second coil that generates the electric energy with rotation of the second rotor.

2. The electronically controlled mechanical timepiece according to claim 1, wherein

the speed adjustment device controls a rotation speed of the first rotor such that the rotation speed is a first rotation speed, and

a second rotation speed, which is a rotation speed of the second rotor during a winding operation of the winding mechanism, is a higher speed than the first rotation speed.

3. The electronically controlled mechanical timepiece according to claim 1, wherein
the winding mechanism includes a rotation weight, and a winding train wheel that transmits rotation of the rotation weight.

4. The electronically controlled mechanical timepiece according to claim 1, wherein
the winding mechanism includes a crown, and a winding train wheel that transmits rotation of the crown.

5. The electronically controlled mechanical timepiece according to claim 1, further comprising:

a power generation detection circuit that detects a power generation state of the power generation mechanism, wherein

the speed adjustment device executes processing of stopping the control of the rotation speed while power generation is detected by the power generation detection circuit.

6. The electronically controlled mechanical timepiece according to claim 5, wherein

the control signal is a chopper signal which is generated based on a comparison result obtained by comparing a rotation detection signal, which is based on an electromotive voltage waveform of the first coil, with a reference signal and of which a pulse width is variably controlled, and

the processing of stopping the control of the rotation speed outputs a fixed chopper signal of which variable control is stopped as the control signal.

7. The electronically controlled mechanical timepiece according to claim 6, wherein
a pulse width of the fixed chopper signal is set to a pulse width that is present immediately before the control of the rotation speed is stopped.

8. The electronically controlled mechanical timepiece according to claim 6, wherein
a pulse width of the fixed chopper signal is set to a predetermined fixed pulse width.

9. The electronically controlled mechanical timepiece according to claim 1, wherein

the first coil is electrically coupled to the power storage device, and

the speed adjustment device includes a charging circuit that charges the power storage device by boosting the electric energy generated by the first coil through chopping control of short-circuiting terminals of the first coil based on the control signal and that controls the rotation speed of the first train wheel via the first coil.

## FIG. 1

# FIG. 2

# FIG. 3

# FIG. 4

EP 4 557 019 A1

EP 4 557 019 A1

# FIG. 5

# FIG. 6

# FIG. 7

```
                    ┌─────────────┐
                    │    START    │
                    └──────┬──────┘
                           │
                           ▼                    S1
              ╱─────────────────────╲
             ╱   POWER VOLTAGE >      ╲    NO
            ╱    PREDETERMINED          ╲────────────►
            ╲    VALUE?                 ╱
             ╲                         ╱
              ╲─────────────────────╱
                           │ YES              S2
                           ▼
                ┌───────────────────┐
                │ POWER GENERATION  │
                │    DETECTION      │
                └─────────┬─────────┘
                          │                   S3
              ╱─────────────────────╲
     YES     ╱   POWER GENERATION     ╲
    ◄───────╱    DETECTED?             ╲
            ╲                         ╱
             ╲─────────────────────╱
                          │ NO              S4
       S8                 ▼
  ┌──────────┐     ┌───────────────┐
  │  FIXED   │     │   ROTATION    │
  │  BRAKE   │     │  DETECTION    │
  │ CONTROL  │     └───────┬───────┘
  └──────────┘             │              S5
              ╱─────────────────────╲
             ╱   COMPARE              ╲  DELAY
             ╲ REFERENCE CLOCK        ╱────────┐
              ╲WITH DETECTION        ╱         │
               ╲ RESULT             ╱          │
                ╲─────────────────╱            │
                     │ ADVANCE                 │
                     ▼          S6             ▼       S7
            ┌───────────────┐        ┌───────────────┐
            │ STRONG BRAKE  │        │  WEAK BRAKE   │
            │   CONTROL     │        │   CONTROL     │
            └───────────────┘        └───────────────┘
```

# FIG. 8

COIL VOLTAGE

DETECTION THRESHOLD

FG1

Fs

POWER GENERATION DETECTION

CONTROL SIGNAL P1

T1 T2 T3 T4 T5

# FIG. 9

# FIG. 10

```
                    ┌─────────────┐
                    │    START    │
                    └─────────────┘
                           │
                           │        S1
                           ▼
                    ╱ POWER VOLTAGE > ╲      NO
                  ╱  PREDETERMINED    ╲─────────────────────────┐
                    ╲    VALUE?      ╱                           │
                           │ YES         S4                      │
                           ▼                                     │
                    ┌──────────────────┐                         │
                    │ ROTATION DETECTION│                        │
                    └──────────────────┘                         │
                           │                                     │
                           │             S5                      │
                           ▼                                     │
                    ╱   COMPARE       ╲    DELAY                 │
                  ╱  REFERENCE CLOCK   ╲──────────┐              │
                    ╲ WITH DETECTION  ╱           │              │
                    ╲    RESULT      ╱            │              │
                           │ ADVANCE  S6          │       S7     │
                           ▼                      ▼              │
                    ┌──────────────┐      ┌──────────────┐       │
                    │ STRONG BRAKE │      │  WEAK BRAKE  │       │
                    │   CONTROL    │      │   CONTROL    │       │
                    └──────────────┘      └──────────────┘       │
                           │                     │               │
                           └─────────────────────┴───────────────┘
```

## FIG. 11

EP 4 557 019 A1

# FIG. 12

# FIG. 13

1D

11D

10D

| CROWN | 7 | WINDING TRAIN WHEEL | 15D |

SECOND TRAIN WHEEL 60D

MAINSPRING 20

ELECTROMAGNETIC POWER GENERATOR 70D

FIRST TRAIN WHEEL 30D

HOUR HAND, MINUTE HAND, SECONDS HAND 4, 5, 6

RECTIFICATION CIRCUIT 80

SPEED ADJUSTMENT DEVICE 40D

POWER STORAGE DEVICE 90

CONTROL SECTION 50

CRYSTAL OSCILLATOR 95

# FIG. 14

Europäisches
Patentamt

European
Patent Office

Office européen
des brevets

# EUROPEAN SEARCH REPORT

**Application Number**

EP 24 21 4130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 054 496 A1 (SEIKO EPSON CORP [JP]) 22 November 2000 (2000-11-22) | 1,3,4 | INV. G04C10/00 |
| A | * figure 1 * * paragraphs [0039] - [0045], [0102], [0103] * * paragraphs [0106], [0107] * ----- | 2,5-9 | |
| Y | US 7 876 070 B2 (SEIKO EPSON CORP [JP]) 25 January 2011 (2011-01-25) * figure 4 * * column 7, line 19 - column 8, line 17 * ----- | 1,3,4 | |
| A | US 2021/018874 A1 (YAMAZAKI YUTAKA [JP]) 21 January 2021 (2021-01-21) * the whole document * ----- | 1-9 | |
| A | CH 707 005 B1 (RICHEMONT INT SA [CH]) 15 February 2023 (2023-02-15) * the whole document * ----- | 1-9 | |
| | | | **TECHNICAL FIELDS SEARCHED (IPC)** |
| | | | G04C |

The present search report has been drawn up for all claims

| Place of search | Date of completion of the search | Examiner |
|---|---|---|
| The Hague | 15 March 2025 | Pirozzi, Giuseppe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4130

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2025

| Patent document cited in search report | | Publication date | Patent family member(s) | | Publication date |
|---|---|---|---|---|---|
| EP 1054496 | A1 | 22-11-2000 | CN | 1290416 A | 04-04-2001 |
| | | | DE | 69927949 T2 | 27-07-2006 |
| | | | EP | 1054496 A1 | 22-11-2000 |
| | | | HK | 1032488 A1 | 20-07-2001 |
| | | | US | 6466519 B1 | 15-10-2002 |
| | | | WO | 0035062 A1 | 15-06-2000 |
| US 7876070 | B2 | 25-01-2011 | CN | 101281390 A | 08-10-2008 |
| | | | EP | 1986060 A1 | 29-10-2008 |
| | | | JP | 5211534 B2 | 12-06-2013 |
| | | | JP | 2008256453 A | 23-10-2008 |
| | | | KR | 20080090311 A | 08-10-2008 |
| | | | US | 2008246437 A1 | 09-10-2008 |
| US 2021018874 | A1 | 21-01-2021 | JP | 7251375 B2 | 04-04-2023 |
| | | | JP | 2021018089 A | 15-02-2021 |
| | | | US | 2021018874 A1 | 21-01-2021 |
| CH 707005 | B1 | 15-02-2023 | CH | 707005 A2 | 31-03-2014 |
| | | | CN | 104813242 A | 29-07-2015 |
| | | | EP | 2901218 A2 | 05-08-2015 |
| | | | JP | 6267204 B2 | 24-01-2018 |
| | | | JP | 2015529338 A | 05-10-2015 |
| | | | US | 2015220064 A1 | 06-08-2015 |
| | | | WO | 2014048819 A2 | 03-04-2014 |

EPO FORM P0459

For more details about this annex : see Official Journal of the European Patent Office, No. 12/82

**EP 4 557 019 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023196472 A
- JP 2000201483 A